# EUROPÄISCHE PATENTSCHRIFT

(11) **EP 3 395 598 B1**
(45) Veröffentlichungstag und Bekanntmachung des Hinweises auf die Patenterteilung: **18.12.2019**
(21) Anmeldenummer: 18165426.0
(22) Anmeldetag: 03.04.2018
(51) Int. Cl.: B60K 15/03, B60K 15/077, B60K 15/067, B60K 15/073

(54) **KRAFTSTOFFBEHÄLTER**
FUEL TANK
RÉSERVOIR À CARBURANT

(30) Priorität: 26.04.2017 DE 102017207057
(43) Veröffentlichungstag der Anmeldung: 31.10.2018
(73) Patentinhaber: MAGNA STEYR Fuel Systems GmbH Werk Schwäbisch Gmünd, 73529 Schwäbisch Gmünd (DE)
(72) Erfinder: FETZER, Horst, 73054 Eislingen (DE); ZANEK, Steffen, 73525 Schwäbisch Gmünd (DE)
(74) Vertreter: Rausch, Gabriele

(56) Entgegenhaltungen:
- EP-A1- 1 187 735
- EP-A2- 2 174 819
- DE-A1-102004 046 914
- DE-A1-102006 021 710
- DE-A1-102008 027 291
- JP-A- 2008 265 532
- US-A- 5 848 720

## Beschreibung

Die Erfindung betrifft ein Kraftstoffbehälter, insbesondere für ein Nutzfahrzeug zur Aufnahme von Kraftstoff, wobei der Kraftstoffbehälter Vorrichtung aufweist, damit er an einem Rahmenlängsträger des Nutzfahrzeugs befestigt werden kann.

### Stand der Technik

Bei Kraftstoffbehältern für Nutzfahrzeuge setzt sich die Außenhülle aus einer Umfangswandung zusammen, welche stirnseitig durch jeweils eine Stirnwandung abgeschlossen ist. In der Regel ist die Umfangswandung rohrförmig ausgebildet, wobei an deren beiden offenen Enden die Stirnwandungen aufgeschweißt sind. Es sind jedoch auch Kraftstoffbehälter bekannt, die sich aus einem oder mehreren hülsenförmigen Teilen zusammensetzen, bei denen wenigstens ein Teil der Umfangswandung einstückig mit der Stirnwandung ist.

Bekannt ist dabei auch, dass in der Umfangswandung eine oder mehrere Zwischenwände, beispielsweise in Form von Schwallwänden oder in Form von Trennwänden zur Unterteilung des Kraftstoffbehälters angeordnet sind.

Kraftstoffbehälter für Nutzfahrzeug sind in der Regel aus Edelstahl, Stahl, Aluminium oder entsprechenden Legierungen hergestellt. Möglich ist es auch, die Umfangswandung und die Zwischenwände aus unterschiedlichen Materialien herzustellen, beispielsweise die Zwischenwände aus Kunststoff und die Umfangswandung aus Metall. Bekannt sind auch Kraftstoffbehälter, deren Außenhüllen vollständig aus Kunststoff gebildet sind.

Unabhängig von der Herstellungsart des Kraftstoffbehälters ist die Befestigung des Kraftstoffbehälters am Nutzfahrzeug über eine Vielzahl von externen Befestigungselementen realisiert. Um den Kraftstoffbehälter am Rahmenlängsträger des Nutzfahrzeuges anzubringen werden Tankträger installiert, bei denen es sich um L-förmige Beträge handelt, die untereinander mit einer längs strebe verbunden sind. In diesen Tankträger wird der Kraftstoffbehälter unter Verwendung von Gummi Unterlagen eingelegt. Befestigt wird der Kraftstoffbehälter über Spannbänder, die mit Bolzen im Tankträger arretiert sind. Der Tankträger selbst wird über Verschraubung Zwischenstücke mit dem Rahmenlängsträger des Nutzfahrzeugs verschraubt.

Aus der DE102009019193A1 ist ein Behälter zur Aufnahme von Kraftstoff bekannt, wobei das Behältnis eine variable Anzahl von Behältniseinheiten umfasst, die über Wandelemente miteinander verbunden sind. Dabei umfasst das jeweilige Wandelement einen Wandbereich und ein Tragelement, wobei das Behältnis mittels des Tragelements an dem Fahrzeug befestigbar ist und das Tragelement sowie der Wandbereich als ein Formteil ausgebildet sind. Allerdings sind diese Wandelemente von außen sichtbar und die einzelnen Behälterelemente müssen jeweils gegeneinander und die Wandelemente gedichtet sein.

Die US 5 848 720 B1 zeigt einen Tank mit Verstärkungswänden innerhalb des Kraftstoffbehälters. Die Verstärkungswände sind unabhängig voneinander im Tankvolumen angeordnet und weisen Schraublöcher an ihren Umfängen auf. Ein Abstandsplatte innerhalb des Tanks wird mit über Schrauben gehalten.

DE 10 2008 027 291 A1 zeigt eine Halteeinrichtung, die über mehrere Tragrahmen und Platten einen Fahrzeugtank an einer Konsole eines Nutzfahrzeugs anbindet.

Die DE 10 2004 046914 A1 offenbart einen Kraftstoffbehälter für ein Nutzfahrzeug mit einer Umfangswandung, welche zusammen mit Stirnwandungen wenigstens einen Befüllraum zur Aufnahme eines flüssigen oder gasförmigen Mediums ausbildet, wobei Schwallwände innerhalb der Umfangswandung vorgesehen sind.

Der Erfindung liegt die Aufgabe zugrunde, einen gegenüber dem Stand der Technik verbesserten Kraftstoffbehälter anzugeben, der das Montageproblem am Fahrzeug vereinfacht.

Vorteilhafte Weiterbildungen der Erfindung sind Gegenstand der Unteransprüche.

Die Aufgabe wird erfindungsgemäß durch einen Kraftstoffbehälter für ein Nutzfahrzeug gemäß Anspruch 1 gelöst.

Der erfindungsgemäße Kraftstofftank hat den Vorteil das die bisher erforderlichen Tankträger, einzelne Befestigungsmittel, Gummiunterlagen und Spannbänder wegfallen können. Dadurch wird die Montage des Kraftstoffbehälters am Nutzfahrzeug weniger aufwendig.

Das Gesamtgewicht des Kraftstoffbehälters wird durch den Wegfall dieser gesamten Komponenten reduziert.

Die Schwallwände weisen Nasen als Mittel zur Befestigung auf. Die bereits im Kraftstoffbehälter vorhandene Schwallwand wird in Doppelfunktion für das Verhindern von Schwappbewegungen des Kraftstoffes verwendet und als Anbindung für die Befestigung am Nutzfahrzeug. Dazu kann in Form von Nasen zusätzliche Mittel an der Schwallwand vorgesehen sein, oder der Außenumfang der Schwallwände dient als Mittel zur Befestigung.

Vorteilhafterweise sind die Mittel zur Befestigung oberhalb einer Mittellinie des Kraftstoffbehälters angeordnet. Durch den Wegfall der gesamten Komponenten zur Befestigung, wie sie bisher im Stand der Technik verwendet wurden, und durch die Anordnung der Mittel zu Befestigung und der Befestigungsmittel wird zudem Bauraum unterhalb des Rahmenlängsträger des Nutzfahrzeugs frei.

Die Schwallwände sind über Längsstreben miteinander verbunden, was die Stabilität des Tanks erhöht.

Es ist von Vorteil, dass die Längsstreben entweder einen gleichen, oder unterschiedliche Abstände zwischen den Schwallwänden vorgeben und man flexibel den jeweiligen Kraftstoffbehälter ausgestalten kann.

Für eine weitere Verstärkung der Schwallwände ist es von Vorteil, dass die Schwallwände auf ihren Flächen Streben zur Verstärkung aufweisen.

Die erfindungsgemäße Lösung ist anwendbar, wenn der Kraftstoffbehälter aus Aluminium, Stahl, Edelstahl oder Kunststoff gebildet ist. Auch für das Material gibt es keine Einschränkungen, um die erfindungsgemäße Befestigungslösung umzusetzen.

In einem Ausführungsbeispiel ist das Befestigungsmittel eine Verschraubung mit mindestens einer Schwallwand sowie an einem Rahmenlängsträger am Nutzfahrzeug.

Alternativ ist das Befestigungsmittel eine Schwalbenschwanzführung, die in einer passenden Aufnahme am Rahmenlängsträger des Nutzfahrzeugs einsteckbar ist.

### Beschreibung der Erfindung

Die Erfindung wird nachfolgend beispielhaft unter Bezugnahme auf die beigefügte Zeichnung beschrieben.
Fig. 1 und Fig. 2 zeigen eine schematische Darstellung des Standes der Technik.
Fig. 3 bis 6 zeigen eine schematische Darstellung der beispielhaften Ausführungsform.

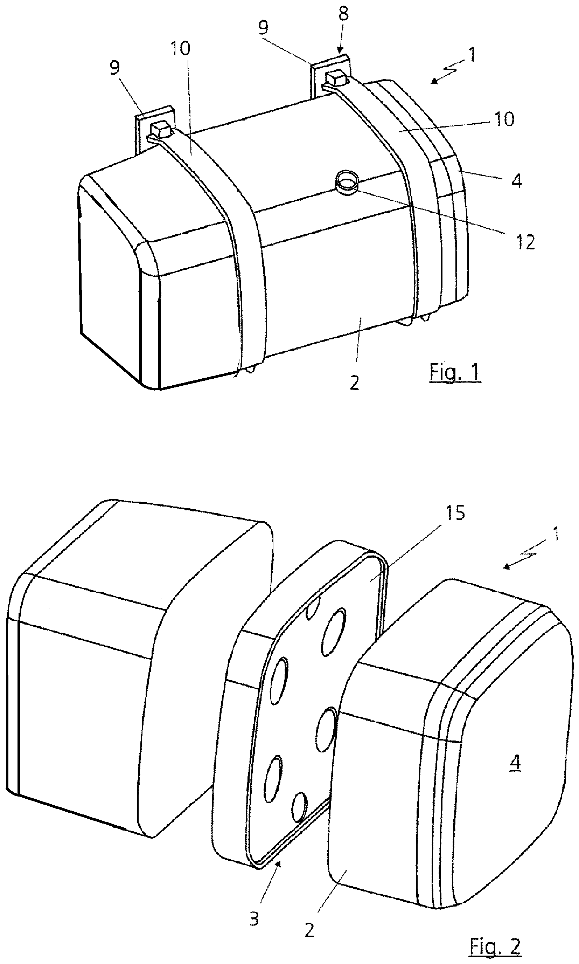

Die Figuren 1 und 2 zeigen einen Kraftstoffbehälter 1 für Nutzfahrzeuge mit einer Umfangswandung 2, der einen Befüllraum 3 ausbildet. Die Umfangswandung 2 ist im Ausführungsbeispiel aus Metall, genauer aus Aluminium ausgebildet. In Frage kommt jedoch auch die Ausgestaltung aus einem anderen metallischen Werkstoff oder aus einem Kunststoff.

Vorgesehen ist eine Ausbildung des Kraftstoffbehälters 1 als großvolumigen Kraftstoffbehälter, dessen Umfangswandung 2 einen Befüllraum 3 mit einer Aufnahmekapazität von 300 bis 1.600 Litern, vorzugsweise 500 bis 1.000 Litern, ausbildet.

Die rohrförmige Umfangswandung 2 weist zwei Stirnseiten auf, wobei beide Stirnseiten in bekannter Weise mittels einer Stirnwandung 4 verschlossen ist. An der anderen Stirnseite der Umfangswandung 2 ist ein Kunststoffbehälter 5 angeschlossen bzw. mit der Umfangswandung 2 verbunden.

Die Umfangswandung 2 wird an einer Konsole 8 eines nur anhand der Anbauteile dargestellten Nutzfahrzeuges angebracht bzw. verspannt werden können. Die Konsole 8 kann dabei in bekannter Weise gestaltet sein. Gemäß der in Fig. 1 dargestellten Ausführungsform weist die Konsole 8 drei Konsolenelemente 9 auf, die jeweils im Wesentlichen eine horizontale und eine vertikale Anlagefläche ausbilden. Zum Verspannen des Kraftstoffbehälters 1 an den Konsolenelementen 9 sind entsprechende Befestigunsgmittel10, nämlich Spannbänder, vorgesehen. Ein Einfüllstutzen 12 dient zur Befüllung des Kraftstoffbehälters. Gemäß der in Fig. 1, Fig. 2 dargestellten Kraftstoffbehälter 1 ist vorgesehen, dass in die Umfangswandung 2 eine Schwallwand 15 eingebracht ist.

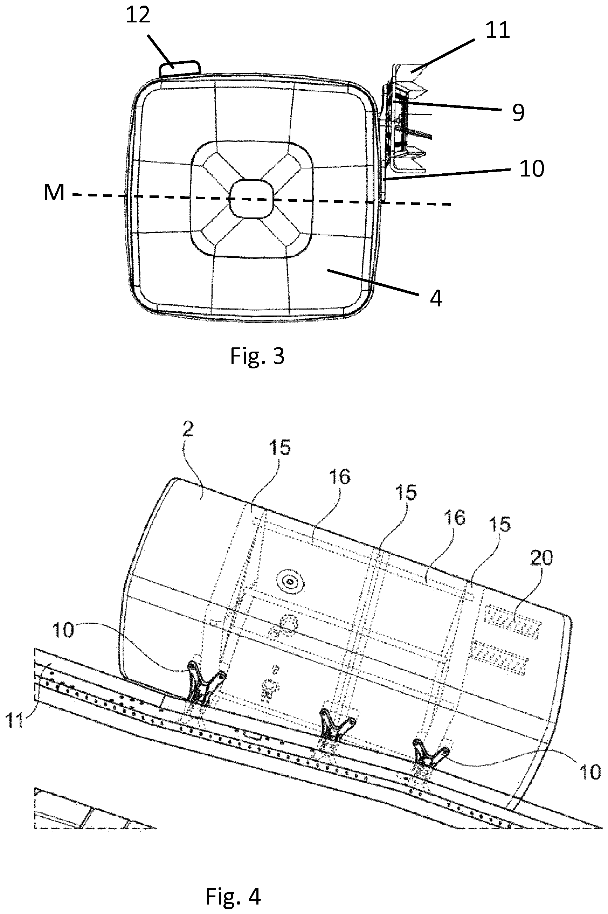

Die erfindungsgemäße Lösung wird in den Figuren 3-6 dargestellt. Figur 3 zeigt eine frontale Ansicht des erfindungsgemäßen Kraftstofftanks dem Blick direkt auf eine Stirnwandung 4. Oberhalb einer gedachten Mittellinie M ist ein Befestigungselement 10 zu erkennen, das an dem korrespondierenden Konsolenelement 9 des Nutzfahrzeuges angebracht ist. Der Rahmenlängsträger 11 des Fahrzeuges ist dabei nur angedeutet. Am Kraftstoffbehälter 1 sind Tritte 20 angebracht.

In Figur 4 ist der Kraftstoffbehälter in einer transparenten Darstellung gezeigt. Die Umfangswandung 2 gibt den Blick frei auf Schwallwände 15. Die Schwallwände, im Ausführungsbeispiel sind drei Schwallwände verwendet, befinden sich im Inneren des Behälters, also innerhalb der Umfangswandung 2. Die Schwallwände 15 sind über Längsstreben 16 untereinander verbunden. Die Längsstreben 16 weisen die Form von Stangen auf, die sich entlang der Längsachse L des Kraftstoffbehälters nahe an der Umfangswandung 2 erstrecken. Dabei werden in diesem Ausführungsbeispiel 4 oder mehr Längsstreben verwendet, die an den Ecken der jeweiligen, nahezu quadratisch gestalteten Schwallwände angebracht sind. Dabei kann es sich um durchgehende Längsstreben handeln, die die mittlere Schwallwand durchdringen und die beiden äußersten Schwallwände15 enden. Alternativ liegen die Längsstreben 16 auch als Längsstreben-Abschnitte vor, die nur jeweils zwei Schwallwände miteinander in Verbindung bringen. Die Länge der Längsstreben 16 und somit der Abstand der Schwallwände 15 wird für den jeweiligen Kraftstoffbehälter optimal gewählt. Dabei können die Schwallwände mit gleichem Abstand zueinander oder mit unterschiedlichen Abstand zueinander eingebaut sein.

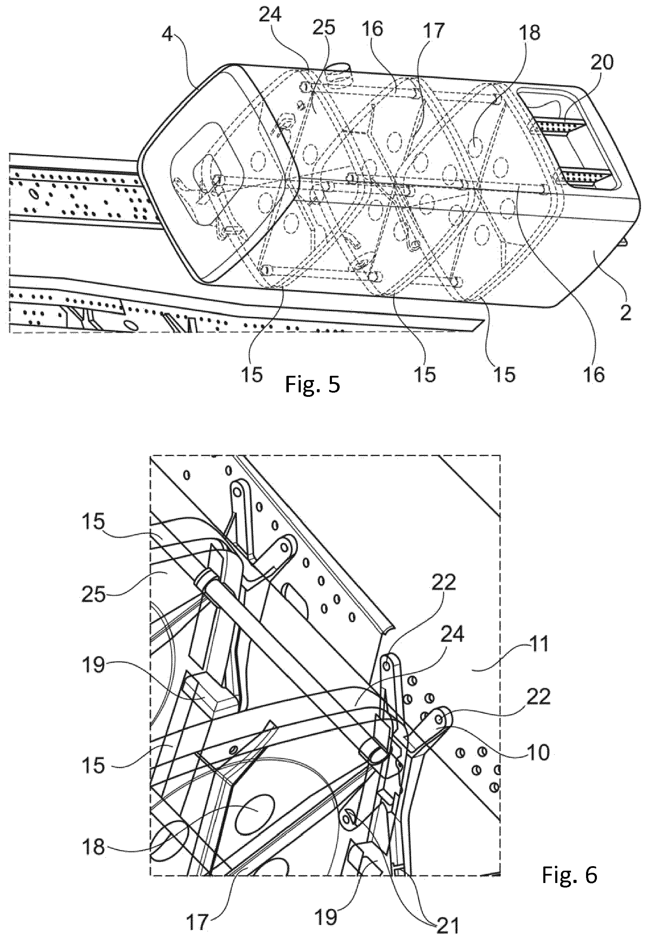

Wie in Figur 5 zu erkennen ist, zeigen die Schwallwände Durchbrüche 18, durch die der Kraftstoff im Kraftstoffbehälter fließen kann. Zur weiteren Verstärkung der Schwallwände auf den Flächen 25 der Schwallwände sind Streben 17 vorgesehen, die in diesem Ausführungsbeispiel die Fläche 25 der Schwallwände sternförmig durchziehen. Auch hier ist es dem Fachmann klar, dass die Verstärkungen der Schwallwände 15 so hergestellt werden, dass eine optimale Versteifung des Kraftstoffbehälters erfolgt. Ausführungen mit fachwerkartigen Streben oder linearen Anordnungen sind möglich.

Weiterhin weist in diesem Ausführungsbeispiel nach Figur 6 die Schwallwand Nasen 19 auf, die sich senkrecht zur Fläche 25 der Schwallwände parallel zur Umfangswandung 2 erstrecken. Die Nasen dienen als Mittel der Befestigung und liegen innerhalb der Umfangswandung 2. Die Nasen sind oberhalb einer gedachten Mittellinie des Kraftstofftanks an den Schwallwänden vorzugsweise einstückig angebracht. Als Mittel zur Befestigung der Schwallwand, kann auch der Außenumfang 24 der Schwallwand dienen.

In Figur 6 ist weiterhin zu erkennen, dass Befestigungsmittel 10 vorhanden sind. In diesem Ausführungsbeispiel weisen sie die Form eines X auf. Dabei sind jeweils an den Endstellen der Finger des X Schraublöcher vorgesehen. Ein erster Satz Schraublöcher 21 dient zur Verschraubung des Kraftstoffbehälters über die Nasen 19 mit der Befestigung 10. Ein zweiter Satz Schraublöcher 22 wiederum dient zur Verschraubung an dem Rahmenlängsträger 11 des Nutzfahrzeuges.

Die Umfangswandung 2 wird nur am Schraubloch durchbrochen und kann über geeignete Schrauben einfach abgedichtet werden.

Alternative Befestigungsmethoden sind dabei denkbar. Auch die Schwallwände selbst können bereits als Anbindung für das externe Befestigungsmittel 10 dienen.

Die durch die Nasen geschaffenen Verbreiterungen sind also nicht in jedem Fall notwendig.

Das vorgeschlagene Befestigungselement ist nur ein Beispiel, es sind viele unterschiedliche Befestigungen denkbar. Wichtig dabei ist lediglich, dass die Befestigung nur oberhalb der gedachten Mittellinie M des Kraftstoffbehälters stattfindet.

Ein weiteres Beispiel ist mit einer Schwalbenschwanzausführung möglich, wobei am Nutzfahrzeug eine Aufnahme befestigt ist und der erfindungsgemäße Kraftstoffbehälter mit einer Schwalbenschwanzführung nur noch eingehängt werden muss.

Der Kraftstoffbehälter kann auch mehrere unterschiedliche Befüllräume aufweisen, wie beispielsweise einen Befüllraum für Harnstoff zusätzlich zum Dieselbefüllraum.

### Bezugszeichenliste

- 1: Kraftstoffbehälter
- 2: Umfangswandung
- 3: Befüllraum
- 4: Stirnwandung
- 8: Konsole
- 9: Konsolenelement
- 10: Befestigungsmittel
- 11: Rahmenlängsträger
- 12: Einfüllstutzen
- 15: Schwallwand
- 16: Längsstrebe
- 17: Strebe
- 18: Durchbruch
- 19: Nase
- 20: Tritte
- 21, 22: Schraublöcher
- 24: Außenumfang Schwallwand
- 25: Flächen Schwallwand

- M: Mittellinie

## Patentansprüche

1. Kraftstoffbehälter für ein Nutzfahrzeug mit einer Umfangswandung (2), welche zusammen mit Stirnwandungen (4) wenigstens einen Befüllraum (3) zur Aufnahme eines flüssigen oder gasförmigen Mediums ausbildet, wobei drei Schwallwände (15) innerhalb der Umfangswandung (2) vorgesehen sind, wobei die Schwallwände ein Mittel (19, 24) zur Befestigung innerhalb der Umfangwandung (2) aufweisen, das mit einem äußeren Befestigungsmittel (10) durch die Umfangswandung (2) verbindbar ist, **dadurch gekennzeichnet, dass** die Schwallwände (15) Nasen (19) als Mittel zur Befestigung aufweisen, die sich senkrecht zur Fläche (25) der Schwallwände parallel zur Umfangswandung (2) erstrecken und die Schwallwände (15) über Längsstreben (16) miteinander verbunden sind.

2. Kraftstoffbehälter für ein Nutzfahrzeug nach Anspruch 1, **dadurch gekennzeichnet, dass** die Mittel zur Befestigung (19, 24) oberhalb einer Mittellinie des Kraftstoffbehälters angeordnet sind.

3. Kraftstoffbehälter für ein Nutzfahrzeug nach einem der vorhergehenden Ansprüche, **dadurch gekennzeichnet, dass** die Längsstreben (16) entweder einen gleichen
oder unterschiedliche Abstände zwischen den Schwallwänden (15) vorgeben.

4. Kraftstoffbehälter für ein Nutzfahrzeug nach einem der vorhergehenden Ansprüche, **dadurch gekennzeichnet, dass** die Schwallwände (15) auf ihren Flächen (25) Streben (17) zur Verstärkung aufweisen.

5. Kraftstoffbehälter für ein Nutzfahrzeug nach einem der vorhergehenden Ansprüche, **dadurch gekennzeichnet, dass** der Kraftstoffbehälter (1) aus Aluminium, Stahl, Edelstahl oder Kunststoff gebildet ist.

6. Kraftstoffbehälter für ein Nutzfahrzeug nach einem der vorhergehenden Ansprüche, **dadurch gekennzeichnet, dass** das Befestigungsmittel (10) eine Verschraubung oder Vernietung mit mindestens einer Schwallwand (15) sowie an einem Rahmenlängsträger (11) am Nutzfahrzeug ermöglicht.

7. Kraftstoffbehälter für ein Nutzfahrzeug nach einem der vorhergehenden Ansprüche, **dadurch gekennzeichnet, dass** das Befestigungsmittel (10) eine Schwalbenschwanzführung ist, die in einer passenden Aufnahme am Rahmenlängsträger (11) des Nutzfahrzeugs befestigbar ist.

## Claims

1. Fuel tank for a truck, with a peripheral wall (2), which together with end walls (4) constitutes at least one receptacle (3) for receiving a liquid or gaseous medium, wherein three baffles (15) are provided inside the peripheral wall (2), wherein the baffles comprise a means (19, 24) for fixing inside the peripheral wall (2), which means can be connected to an outer fixing means (10) through the peripheral wall (2),
**characterized in that** the baffles (15) comprise lugs (19) as a fixing means, which lugs extend vertically from the surface (25) of the baffles parallel to the peripheral wall (2), and the baffles (15) are connected together via longitudinal struts (16).

2. Fuel tank for a truck according to Claim 1, **characterized in that** the fixing means (19, 24) are arranged above a centre line of the fuel tank.

3. Fuel tank for a truck according to any of the preceding claims, **characterized in that** the longitudinal struts (16) predefine either an equal or different distances between the baffles (15).

4. Fuel tank for a truck according to any of the preceding claims, **characterized in that** the baffles (15) have reinforcing struts (17) on their surfaces (25).

5. Fuel tank for a truck according to any of the preceding claims, **characterized in that** the fuel tank (1) is made of aluminium, steel, stainless steel or plastic.

6. Fuel tank for a truck according to any of the preceding claims, **characterized in that** the fixing means (10) allows bolting or riveting to at least one baffle (15) and to a chassis side member (11) on the truck.

7. Fuel tank for a truck according to any of the preceding claims, **characterized in that** the fixing means (10) is a dovetail guide which can be fixed in a corresponding receiver on the chassis side member (11) of the truck.

## Revendications

1. Réservoir à carburant destiné à un véhicule utilitaire et comprenant une paroi périphérique (2) qui forme, conjointement avec des parois frontales (4), au moins un espace de remplissage (3) destiné à recevoir un milieu liquide ou gazeux, trois parois déflectrices (15) étant prévues à l'intérieur de la paroi périphérique (2), les parois déflectrices comportant un moyen (19, 24) destiné à la fixation à l'intérieur de la paroi périphérique (2), lequel moyen peut être relié à un moyen de fixation extérieur (10) par le biais de la paroi périphérique (2), **caractérisé en ce que** les parois déflectrices (15) comportent des ergots (19) qui servent de moyens de fixation et qui s'étendent perpendiculairement à la surface (25) des parois déflectrices parallèlement à la paroi périphérique (2) et les parois déflectrices (15) sont reliées entre elles par le biais de montants longitudinaux (16).

2. Réservoir à carburant destiné à un véhicule utilitaire selon la revendication 1, **caractérisé en ce que** les moyens de fixation (19, 24) sont disposés au-dessus d'une ligne médiane du réservoir à carburant.

3. Réservoir à carburant destiné à un véhicule utilitaire selon l'une des revendications précédentes, **caractérisé en ce que** les montants longitudinaux (16) spécifient une distance identique ou différente entre les parois déflectrices (15).

4. Réservoir à carburant destiné à un véhicule utilitaire selon l'une des revendications précédentes, **caractérisé en ce que** les parois déflectrices (15) comportent sur leurs surfaces (25) des montants (17) destinés au renforcement.

5. Réservoir à carburant destiné à un véhicule utilitaire selon l'une des revendications précédentes, **caractérisé en ce que** le réservoir à carburant (1) est en aluminium, en acier, en acier inoxydable ou en matière synthétique.

6. Réservoir à carburant destiné à un véhicule utilitaire selon l'une des revendications précédentes, **caractérisé en ce que** le moyen de fixation (10) permet un vissage ou un rivetage à au moins une paroi déflectrice (15) ainsi qu'à un longeron de châssis (11) du véhicule utilitaire.

7. Réservoir à carburant destiné à un véhicule utilitaire selon l'une des revendications précédentes, **caractérisé en ce que** le moyen de fixation (10) est un guide en queue d'aronde pouvant être fixé dans un logement ajusté au niveau du longeron de châssis (11) du véhicule utilitaire.
